# EUROPÄISCHE PATENTANMELDUNG

(11) **EP 3 546 255 A1**
(43) Veröffentlichungstag der Anmeldung: **02.10.2019**
(21) Anmeldenummer: 19160208.5
(22) Anmeldetag: 01.03.2019
(51) Int. Cl.: B60D 1/06, B60D 1/58

(54) **KUPPLUNGSTEIL**

(30) Priorität: 29.03.2018 AT 502662018
(71) Anmelder: Scharmüller, Josef, 4892 Fornach (AT); Scharmüller, Josef, jun., 4892 Fornach (AT); Scharmüller, Christine, 4892 Fornach (AT)
(72) Erfinder: Scharmüller, Josef, 4892 Fornach (AT); Scharmüller, Josef, jun., 4892 Fornach (AT); Scharmüller, Christine, 4892 Fornach (AT)
(74) Vertreter: Gibler & Poth Patentanwälte KG

(57) **Zusammenfassung**

Bei einem Kupplungsteil (1) einer Fahrzeugkupplung umfassend einen Grundkörper (2), einer an dem Grundkörper (2) befestigten Kupplungskugel (3) und einen beweglich an dem Grundkörper (2) befestigten Niederhalter (4), wobei der Niederhalter (4) eine Kontaktfläche (5) zum Kontaktieren einer Kupplungspfanne aufweist, wobei der Niederhalter (4) zum Halten der Kupplungspfanne auf der Kupplungskugel (3) in einer Niederhaltestellung fixierbar ist, wird vorgeschlagen, dass Niederhalter (4) mittels einer Linearführung (6) an dem Grundkörper (2) befestigt ist, wobei eine vorgegebene Bewegungsrichtung der Linearführung (6) im Wesentlichen parallel zu einer vorgesehenen Zugrichtung des Kupplungsteils (1) ist.

## Beschreibung

Die Erfindung betrifft einen Kupplungsteil einer Fahrzeugkupplung gemäß dem Oberbegriff des Patentanspruches 1.

Der Kupplungsteil ist ein Teil einer Fahrzeugkupplung, wobei das Kupplungsteil eine Kupplungskugel und einen Niederhalter aufweist. Der Niederhalter ist dazu vorgesehen die Kupplungspfanne eines Gegenkupplungsteils der Fahrzeugkupplung auf der Kupplungskugel niederzuhalten. Hierbei wird der Niederhalter in einer Niederhaltestellung arretiert, bei welcher der Niederhalter die, der Kupplungskugel abgewandte Seite der Kupplungspfanne kontaktiert. Hierbei ist es bekannt, den Niederhalter für den Kupplungsvorgang wegzuschwenken, um die Kupplungspfanne auf der Kupplungskugel anzuordnen oder von dort zu entfernen.

Nachteilig daran ist, dass für das Wegschwenken des Niederhalters ein entsprechender Platz oberhalb des Kupplungsteils notwendig ist, welcher für andere Einbauten nicht zur Verfügung steht. Gerade bei modernen Zugfahrzeugen nimmt die Anzahl der möglichen Anschlüsse und unterschiedlichen Kupplungssystem im Heck immer mehr zu, sodass sehr wenig Platz für die einzelnen Einbauten vorhanden ist. Weiters wird dadurch der Abstand zwischen der Zapfwelle und der Fahrzeugkupplung vergrößert, welcher möglichst gering sein sollte um hohe Knickwinkel zu ermöglichen.

Aufgabe der Erfindung ist es daher einen Kupplungsteil der eingangs genannten Art anzugeben, mit welchem die genannten Nachteile vermieden werden können, mit welchem der Platzbedarf wesentlich reduziert werden kann, und welches dennoch zuverlässig und sicher funktioniert.

Erfindungsgemäß wird dies durch die Merkmale des Patentanspruches 1 erreicht.

Dadurch ergibt sich der Vorteil, dass des Kupplungsteils für den Betrieb einen geringeren Platzbedarf hat, da der zusätzliche Platz zum Wegschwenken des Niederhalters entfällt. Dadurch ist es möglich andere Einbauten im Heck des Zugfahrzeuges, wie eine Zapfwelle, wesentlich näher am Kupplungsteil zu positionieren. Weiters hat sich gezeigt, dass für die Kupplungsvorgänge der Niederhalter nur geringfügig entlang der vorgesehenen Zugrichtung von der Kupplungskugel weggezogen werden braucht, um die Kupplungspfanne auf der Kupplungskugel zu positionieren oder davon zu entfernen. Durch die Linearführung ist der Niederhalter weiters zuverlässig gegen ein ungewolltes Abheben geschützt und leicht zu arretieren. Weiters sind nur wenige Teile notwendig, wodurch das Kupplungsteil wartungsarm bleibt.

Weiters ist eine Fahrzeugkupplung gemäß dem Patentanspruch 8 vorgesehen.

Weiters ist ein Fahrzeuggespann gemäß dem Patentanspruch 9 vorgesehen.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 eine bevorzugte Ausführungsform des Kupplungsteils als axonometrische Darstellung;
Fig. 2 die bevorzugte Ausführungsform des Kupplungsteils in Vorderansicht;
Fig. 3 die bevorzugte Ausführungsform des Kupplungsteils in Seitenansicht;
Fig. 4 die bevorzugte Ausführungsform des Kupplungsteils in Draufsicht;
Fig. 5 ein Niederhaltergrundkörper der bevorzugte Ausführungsform des Kupplungsteils in Seitenansicht;
Fig. 6 den Niederhaltergrundkörper der bevorzugten Ausführungsform des Kupplungsteils in Vorderansicht; und
Fig. 7 den Niederhaltergrundkörper der bevorzugten Ausführungsform des Kupplungsteils in Draufsicht.

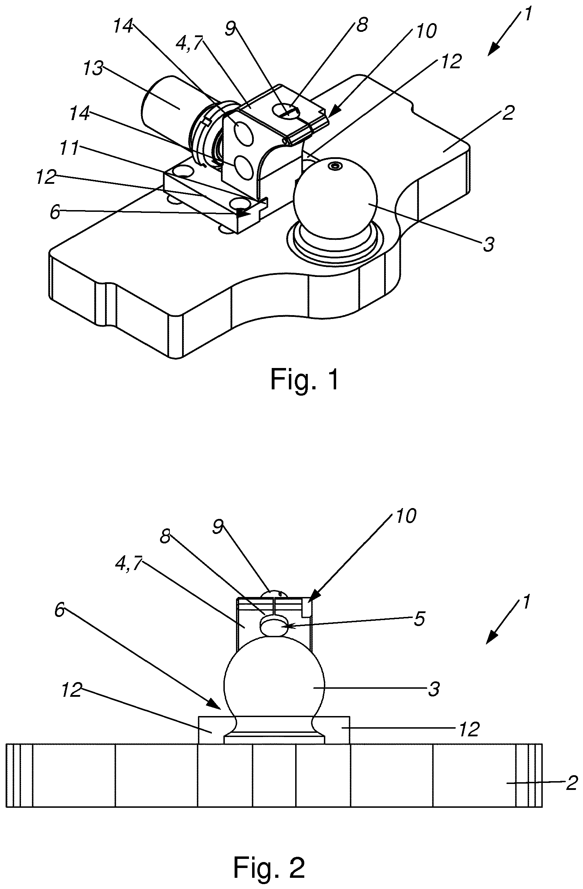

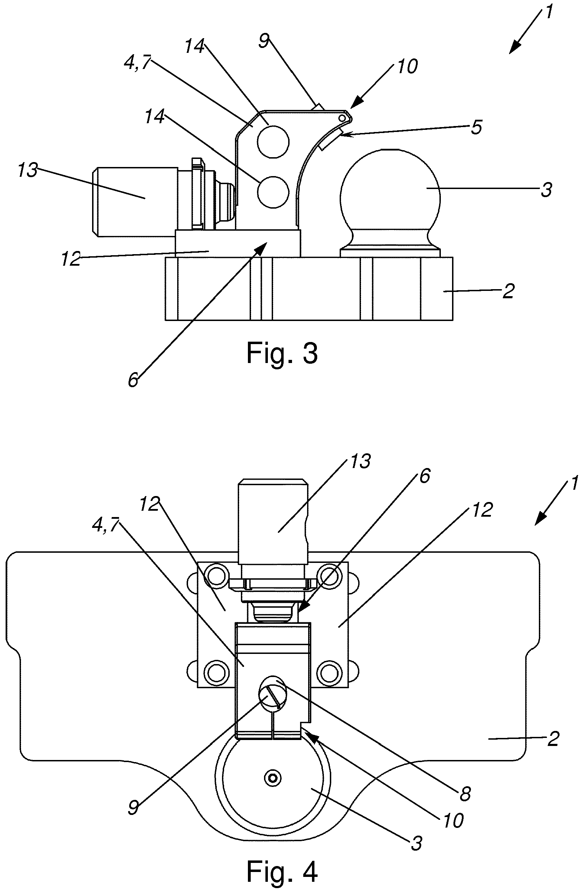

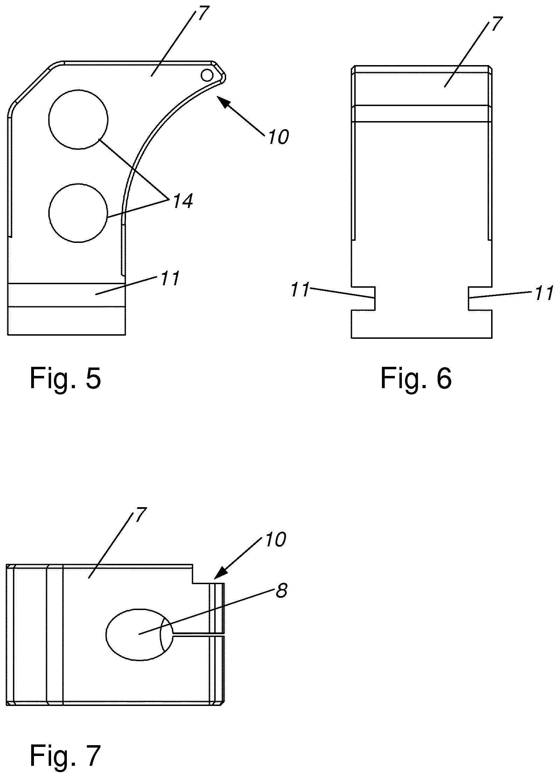

Die Fig. 1 bis 7 zeigen zumindest Teile eines Kupplungsteils 1 einer Fahrzeugkupplung umfassend einen Grundkörper 2, einer an dem Grundkörper 2 befestigten Kupplungskugel 3 und einen beweglich an dem Grundkörper 2 befestigten Niederhalter 4, wobei der Niederhalter 4 eine Kontaktfläche 5 zum Kontaktieren einer Kupplungspfanne aufweist, wobei der Niederhalter 4 zum Halten der Kupplungspfanne auf der Kupplungskugel 3 in einer Niederhaltestellung fixierbar ist. Der Kupplungsteil 1 ist dazu vorgesehen mit einem Gegenkupplungsteil umfassend eine Kupplungspfanne gekuppelt zu werden. In einem gekuppelten Zustand der Fahrzeugkupplung ist der Niederhalter in der Niederhaltestellung fixiert und hält der Niederhalter 4 die Kupplungspfanne auf der Kupplungskugel 3. In den Fig. 1 bis 4 ist der Niederhalter 4 in der Niederhaltestellung dargestellt.

Der Grundkörper 2 ist dazu vorgesehen, an dem restlichen Zugfahrzeug befestigt zu werden. Dies kann insbesondere unlösbar, insbesondere durch anschweißen, oder lösbar, insbesondere durch anschrauben, erfolgen. Weiters ist über den Grundkörper 2 die Kupplungskugel 3 mit dem Niederhalter 4 verbunden.

Die in den Fig. 1 bis 4 dargestellte Grundplatte 2 ist vorzugsweise dazu vorgesehen mit zusätzlichen seitlichen Führungsschienen in einem Lagerbock befestigt zu werden.

Vorgesehen ist, dass Niederhalter 4 mittels einer Linearführung 6 an dem Grundkörper 2 befestigt ist, wobei eine vorgegebene Bewegungsrichtung der Linearführung 6 im Wesentlichen parallel zu einer vorgesehenen Zugrichtung des Kupplungsteils 1 ist. Die Linearführung 6 ist eine Geradführung, welche die Bewegung des Niederhalters 4 entlang der vorgegebenen Bewegungsrichtung zulässt, aber eine Bewegung in eine andere Richtung sperrt. Die Linearführung 6 kann insbesondere durch das ineinandergreifen zweier hinterschnittener Profile erfolgen. Der Niederhalter 4 kann entlang der Linearführung 6 zwischen der Niederhaltestellung und einer Freigabestellung verschoben werden. In der Freigabestellung des Niederhalters 4 behindert der Niederhalter 4 das Ankuppeln und Abkuppeln der Kupplungspfanne nicht.

Das Kupplungsteil 1 weist eine vorgesehene Zugrichtung auf. Die vorgesehene Zugrichtung ist eine - in Betriebsposition gesehen - waagrechte Richtung, welche bei einer Geradeausfahrt des Fahrzeuggespanns in Fahrtrichtung verläuft. Das die vorgegebene Bewegungsrichtung der Linearführung 6 im Wesentlichen parallel zu einer vorgesehenen Zugrichtung des Kupplungsteils 1 ist bedeutet insbesondere, dass die vorgegebene Bewegungsrichtung der Linearführung 6 maximal 15°, insbesondere maximal 10°, besonders bevorzugt maximal 5°, von der vorgesehenen Zugrichtung abweicht.

Dadurch ergibt sich der Vorteil, dass des Kupplungsteils 1 für den Betrieb einen geringeren Platzbedarf hat, da der zusätzliche Platz zum Wegschwenken des Niederhalters 4 entfällt. Dadurch ist es möglich andere Einbauten im Heck des Zugfahrzeuges, wie eine Zapfwelle, wesentlich näher am Kupplungsteil 1 zu positionieren. Weiters hat sich gezeigt, dass für die Kupplungsvorgänge der Niederhalter 4 nur geringfügig entlang der vorgesehenen Zugrichtung von der Kupplungskugel 3 weggezogen werden braucht, um die Kupplungspfanne auf der Kupplungskugel 3 zu positionieren oder davon zu entfernen. Durch die Linearführung 6 ist der Niederhalter 4 weiters zuverlässig gegen ein ungewolltes Abheben geschützt und leicht zu arretieren. Weiters sind nur wenige Teile notwendig, wodurch das Kupplungsteil 1 wartungsarm bleibt.

Der Kupplungsteil 1 kann insbesondere an einem Zugfahrzeug befestigt sein.

Das Zugfahrzeug kann insbesondere im Wesentlichen unmittelbar über dem Kupplungsteil 1 eine Zapfwelle aufweisen.

Weiters ist eine Fahrzeugkupplung umfassend den Kupplungsteil 1 und eine Kupplungspfanne vorgesehen, wobei in einem gekuppelten Zustand die Kupplungspfanne auf der Kupplungskugel 3 angeordnet ist, und der Niederhalter 4 in der Niederhaltestellung die Kupplungspfanne auf der Kupplungskugel 3 hält. Die Kupplungspfanne weist eine Aufnahmepfanne mit einer teilsphärischen Innenfläche auf. Die Kupplungspfanne ist in einem angekuppelten Zustand der Fahrzeugkupplung auf der Kupplungskugel 3 des Kupplungsteils 1 aufgesetzt, wodurch eine um drei Achsen verschwenkbare Verbindung zwischen dem Kupplungsteil und der Kupplungspfanne entsteht. Die Kontaktfläche 5 des Niederhalters ist in dem angekuppelten Zustand der Außenseite der Kupplungspfanne zugewandt.

Die Kupplungspfanne kann insbesondere an einem Anhänger befestigt sein.

Die Fahrzeugkupplung kann hierbei insbesondere eine Fahrzeugkupplung für den landwirtschaftlichen Bereich sein, also für einen Traktor und einen landwirtschaftlichen Anhänger.

Weiters ist ein Fahrzeuggespann umfassend diese Fahrzeugkupplung vorgesehen. Das Fahrzeuggespann umfasst insbesondere ein Zugfahrzeug mit dem Kupplungsteil 1, und ein Anhänger mit der Kupplungspfanne.

Bevorzugt kann vorgesehen sein, dass eine Flächennormale der Kontaktfläche 5 einen Winkel von mindestens 15°, insbesondere mindestens 25°, bevorzugt mindestens 35°, zu einer Senkrechten aufweist, und/oder die Flächennormale der Kontaktfläche 5 einen Winkel von maximal 60°, insbesondere maximal 50°, bevorzugt maximal 45°, zu der Senkrechten aufweist. Bei einer gekrümmten Kontaktfläche 5 ist die Flächennormale an dem Flächenschwerpunkt der Kontaktfläche 5 heranzuziehen. Die Senkrechte ist eine gedachte, und in Betriebsposition gesehen senkrechte Linie. Die Senkrechte ist insbesondere rechtwinkelig zu der vorgesehen Zugrichtung. Durch den Winkelbereich der Flächennormalen der Kontaktfläche 5 zu der Senkrechten, kann der Weg zwischen der Niederhaltestellung und der Freigabestellung gering gehalten werden, da die Kupplungspfanne besonders gut von schräg oben auf die Kupplungskugel 3 aufgleiten kann. Dadurch kann der Platzbedarf besonders gering gehalten werden.

Die Linearführung 6 kann insbesondere ein Gleitlager aufweisen, welches besonders robust ist. Alternativ kann ein Wälzlager vorgesehen sein.

Bevorzugt kann vorgesehen sein, dass der Niederhalter 4 an einer Unterseite zwei gegenüberliegende gerade Nuten 11 als Führung für die Linearführung 6 aufweist. Die Nuten 11 können insbesondere seitlich an dem Niederhaltergrundkörper 7 ausgebildet sein. Durch die beiden Nuten 11 wird ein hinterschnittenes Führungsprofil als Teil der Linearführung 6 erzeugt. Durch die Nuten 11 kann eine einfache aber robuste Ausbildung erreicht werden. Weiters kann dadurch der Niederhalter 4 auch in herkömmliche Niederhalterhalterungen von anderen Kupplungsteilen ohne Linearführung 6 eingesetzt werden, da durch die Nuten 11 keine hervorstehenden Fortsätze notwendig sind, sondern die Seitenflächen des Niederhalters 4 im Wesentlichen eben sind. Dadurch kann die Logistik von Ersatzteilen einfach gehalten werden.

Weiters kann vorgesehen sein, dass der Niederhalter wenigstens eine, insbesondere zwei, quer zur Zugrichtung verlaufende und durchgehende Bolzendurchführungsöffnungen 14 aufweist. Die Bolzendurchführungsöffnungen 14 sind dazu vorgesehen Befestigungsbolzen für die Befestigung bei einem herkömmlichen Kupplungsteil 1 ohne Linearführung 6 aufzunehmen.

Insbesondere kann vorgesehen sein, dass der Grundkörper 2 zumindest im Bereich der Linearführung 6 eben ist, und dass zur Ausbildung eines Führungsprofils für die Linearführung 6 zwei Führungsschienen 12 am Grundkörper 2 befestigt sind. Durch die beiden Führungsschienen 12 am Grundkörper 2 wird ein hinterschnittenes Gegenprofil für den Niederhalter 4 erzeugt, entlang welches sich der Niederhalter 4 bewegen kann. Hierbei greifen die Führungsschienen 12 in die Nuten 11 des Niederhalters 4. Dadurch kann eine besonders einfache und robuste Bauweise realisiert werden.

Die zwei Führungsschienen 12 können insbesondere lösbar am Grundkörper 2 befestigt sein, insbesondere durch eine Schraubverbindung. Dadurch kann durch ein lösen der lösbaren Verbindung der Niederhalter 4 abgenommen werden.

Der Grundkörper 2 kann insbesondere plattenförmig sein.

Weiters kann vorgesehen sein, dass der Kupplungsteil 1 einen Antrieb 13 zur Bewegung des Niederhalters 4 entlang der Linearführung 6 aufweist. Der Antrieb kann hydraulisch oder elektrisch sein. Der Antrieb 13 kann insbesondere an einer der Kupplungskugel abgewandten Seite des Niederhalters 4 angeordnet sein. Durch den Antrieb kann der Platzbedarf weiter reduziert werden, da kein hantieren mit dem Niederhalter 4 mehr notwendig ist.

Der Antrieb 13 kann insbesondere selbsthemmend sein. Dadurch sorgt der Antrieb 13 bereits für eine Fixierung des Niederhalters 4.

Insbesondere kann eine zusätzliche Fixierung vorgesehen sein, um den Niederhalter 4 in der Niederhalterstellung zu fixieren. Die zusätzliche Fixierung kann bevorzugt durch einen quer zur Bewegungsrichtung der Linearführung 6 verlaufenden Fixierungsbolzen erfolgen.

Weiters kann vorgesehen sein, dass der Kupplungsteil 1 einen Kraftaufnehmer zur Erfassung einer von der Kupplungspfanne auf den Niederhalter 4 ausgeübten Kraft aufweist. Durch den Kraftaufnehmer kann ein etwaiges Versagen der Fahrzeugkupplung vorhergesagt werden, oder die gemessene Kraft zur Steuerung eines Bremsassistenten für das Fahrzeuggespann verwendet werden. Hierbei kann insbesondere der Druck des Niederhalters 4 in Bewegungsrichtung der Linearführung 6 gemessen werden.

Für einen zuverlässigen und verschleißarmen Betrieb der Fahrzeugkupplung ist es vorteilhaft, dass die Kupplungspfanne mit einem gewissen Spiel auf der Kupplungskugel 3 aufliegt. Der Niederhalter 4 kann hierfür insbesondere eine Einstellschraube 9 mit der Kontaktfläche 5 aufweisen, durch welche sich der Abstand zwischen der Kupplungskugel 3 und der Kontaktfläche 5 in einem vorgebbaren Bereich stufenlos eingestellt werden kann.

Um die Einstellung der Einstellschraube 9 für den Betrieb zu fixieren kann es vorgesehen sein, einen überstehenden Teil der Einstellschraube 9 mit einer Kontermutter zu verspannen. Durch diese Kontermutter wird allerdings die Bauhöhe des Niederhalters 4 vergrößert.

Besonders bevorzugt kann daher vorgesehen sein, dass der Niederhalter 4 den Niederhaltergrundkörper 7 mit einer Gewindebohrung 8 aufweist, dass in der Gewindebohrung 8 die Einstellschraube 9 angeordnet ist, dass die Einstellschraube 9 die Kontaktfläche 5 zum Kontaktieren der Kupplungspfanne aufweist, dass der Niederhalter 4 eine Klemmeinrichtung 10 zum Einklemmen der Einstellschraube 9 in der Gewindebohrung 8 aufweist, und dass die Klemmeinrichtung seitlich der Gewindebohrung 8 angeordnet ist. Die Fixierung der Einstellschraube 9 erfolgt daher nicht durch eine Kontermutter direkt an der Einstellschraube 9, sondern durch ein seitliches Einklemmen der Einstellschraube 9 in der Gewindebohrung 8. Dieses Einklemmen kann beispielsweise durch ein Zusammenpressen des Innengewindes der Gewindebohrung 8 erfolgen und/oder durch eine direkte seitliche Aufbringung der Klemmkraft auf die Einstellschraube 9. Die seitliche Anordnung der Klemmeinrichtung 10 bezieht sich darauf, dass die Klemmeinrichtung 10 nicht wie eine Kontermutter in einer verlängerten Längsachse der Gewindebohrung 8 angeordnet ist, sondern seitlich der Gewindebohrung 8, beziehungsweise der Längsachse der Gewindebohrung 8. Insbesondere kann die Klemmeinrichtung 10 ausgebildet sein eine seitlich wirkende, insbesondere im Wesentlichen senkrecht zu der Längsachse der Gewindebohrung 8 wirkende, Klemmkraft auf die Einstellschraube 9 in der Gewindebohrung 8 auszuüben. Dadurch ergibt sich der Vorteil, dass der Niederhalter 4 wesentlich niedriger gebaut werden kann, da ein Vorstehen der Einstellschraube 9 aus dem Niederhaltergrundkörper 7 nicht mehr notwendig ist. Durch die seitlich der Gewindebohrung 8 angeordnete Klemmeinrichtung 10 kann die benötigte Größe des Niederhalters 4 verringert werden.

Besonders bevorzugt kann vorgesehen sein, dass die Gewindebohrung 8 wenigstens einen seitlichen Schlitz aufweist, wobei der Schlitz zwei Bereiche des Niederhaltergrundkörpers 7 voneinander trennt, und dass die Klemmeinrichtung 10 ausgebildet ist die beiden durch den Schlitz getrennten Bereiche des Niederhaltergrundkörpers 7 vorgebbar zusammen zu drücken. Durch den Schlitz ist ein Querschnitt der Gewindebohrung 8 leichter zu deformieren, so dass durch ein Zusammendrücken der beiden durch den Schlitz getrennten Bereiche die Einstellschraube 9 in der Gewindebohrung 8 eingeklemmt, und dadurch fixiert wird.

Gemäß einer nicht dargestellten Ausführungsform kann der Schlitz sich nur teilweise von der Gewindebohrung 8 in den Niederhaltergrundkörper 7 erstrecken, sodass die Gewindebohrung 8 mit dem Schlitz komplett von dem Niederhaltergrundkörper 7 umschlossen wird.

Besonders bevorzugt kann vorgesehen sein, dass der wenigstens eine Schlitz randoffen ist, und sich von der Gewindebohrung 8 bis zu einem freien Ende des Niederhaltergrundkörpers 7 erstreckt. Dadurch ist der Schlitz und die Gewindebohrung 8 mit wenig Kraft zusammendrückbar, wodurch die Klemmeinrichtung 10 ausgebildet sein kann und einfach zu betätigen ist.

Weiters kann vorgesehen sein, dass die Klemmeinrichtung 10 ein Klemmelement zur Erzeugung einer Klemmkraft aufweist. Das Klemmelement ist jener Teil der Klemmeinrichtung 10, durch dessen Betätigung die Klemmkraft vorgebbar aufgebracht und wieder entfernt werden kann. Das Klemmelement selber ist in den Fig. 1 bis 4 nicht dargestellt.

Besonders bevorzugt kann, dass das Klemmelement im Bereich des freien Endes des Niederhaltergrundkörpers 7 angeordnet ist. Dadurch kann durch Ausnützung einer Hebelwirkung das Klemmelement mit wenig Kraftaufbringung des Klemmelementes eine hohe Klemmkraft erreicht werden.

Besonders bevorzugt kann vorgesehen sein, dass das Klemmelement eine Schraube ist.

Insbesondere kann vorgesehen sein, dass bei dem Schlitz eine zweite Gewindebohrung und eine, zur zweiten Gewindebohrung fluchtende gewindelose Durchgangsöffnung angeordnet sind, wobei die zweite Gewindebohrung und die Durchgangsöffnung durch den Schlitz getrennt sind. Durch Einschrauben der Schraube in die zweite Gewindebohrung durch die Durchgangsöffnung kann der Spalt vorgebbar zusammengedrückt werden. Bei der Durchgangsöffnung kann eine Ausnehmung für den Schraubenkopf vorgesehen sein, damit der Schraubenkopf nicht über die Seitenfläche hinausragt.

Alternativ zur Schraube kann vorgesehen sein, dass das Klemmelement ein Exzenter ist. Der Exzenter benötigt zwar mehr Platz als eine Schraube, kann aber im Gegensatz zu der Schraube auch werkzeuglos bedient werden.

## Patentansprüche

1. Kupplungsteil (1) einer Fahrzeugkupplung umfassend einen Grundkörper (2), einer an dem Grundkörper (2) befestigten Kupplungskugel (3) und einen beweglich an dem Grundkörper (2) befestigten Niederhalter (4), wobei der Niederhalter (4) eine Kontaktfläche (5) zum Kontaktieren einer Kupplungspfanne aufweist, wobei der Niederhalter (4) zum Halten der Kupplungspfanne auf der Kupplungskugel (3) in einer Niederhaltestellung fixierbar ist, **dadurch gekennzeichnet, dass** Niederhalter (4) mittels einer Linearführung (6) an dem Grundkörper (2) befestigt ist, wobei eine vorgegebene Bewegungsrichtung der Linearführung (6) im Wesentlichen parallel zu einer vorgesehenen Zugrichtung des Kupplungsteils (1) ist.

2. Kupplungsteil (1) nach Anspruch 1, **dadurch gekennzeichnet, dass** eine Flächennormale der Kontaktfläche (5) einen Winkel von mindestens 15°, insbesondere mindestens 25°, bevorzugt mindestens 35°, zu einer Senkrechten aufweist, und/oder die Flächennormale der Kontaktfläche (5) einen Winkel von maximal 60°, insbesondere maximal 50°, bevorzugt maximal 45°, zu der Senkrechten aufweist.

3. Kupplungsteil (1) nach Anspruch 1 oder 2, **dadurch gekennzeichnet, dass** der Niederhalter (4) einen Niederhaltergrundkörper (7) mit einer Gewindebohrung (8) aufweist, dass in der Gewindebohrung (8) eine Einstellschraube (9) angeordnet ist, dass die Einstellschraube (9) die Kontaktfläche (5) zum Kontaktieren der Kupplungspfanne aufweist, dass der Niederhalter (4) eine Klemmeinrichtung (10) zum Einklemmen der Einstellschraube (9) in der Gewindebohrung (8) aufweist, und dass die Klemmeinrichtung seitlich der Gewindebohrung (8) angeordnet ist.

4. Kupplungsteil (1) nach einem der Ansprüche 1 bis 3, **dadurch gekennzeichnet, dass** der Niederhalter (4) an einer Unterseite zwei gegenüberliegende gerade Nuten (11) als Führung für die Linearführung (6) aufweist.

5. Kupplungsteil (1) nach einem der Ansprüche 1 bis 4, **dadurch gekennzeichnet, dass** der Grundkörper (2) zumindest im Bereich der Linearführung (6) eben ist, und dass zur Ausbildung eines Führungsprofils für die Linearführung (6) zwei Führungsschienen (12) am Grundkörper (2) befestigt sind.

6. Kupplungsteil (1) nach einem der Ansprüche 1 bis 5, **dadurch gekennzeichnet, dass** der Kupplungsteil (1) einen Antrieb (13) zur Bewegung des Niederhalters (4) entlang der Linearführung (6) aufweist.

7. Kupplungsteil (1) nach einem der Ansprüche 1 bis 6, **dadurch gekennzeichnet, dass** der Kupplungsteil (1) einen Kraftaufnehmer zur Erfassung einer von der Kupplungspfanne auf den Niederhalter (4) ausgeübten Kraft aufweist.

8. Fahrzeugkupplung umfassend ein Kupplungsteil (1) nach einem der Ansprüche 1 bis 7 und eine Kupplungspfanne, wobei in einem gekuppelten Zustand die Kupplungspfanne auf der Kupplungskugel (3) angeordnet ist, und der Niederhalter (4) in der Niederhaltestellung die Kupplungspfanne auf der Kupplungskugel (3) hält.

9. Fahrzeuggespann umfassend eine Fahrzeugkupplung nach Anspruch 8.
